# EUROPEAN PATENT APPLICATION

(11) **EP 4 597 465 A1**
(43) Date of publication of application: **06.08.2025**
(21) Application number: 22960875.7
(22) Date of filing: 28.09.2022
(51) Int. Cl.: G08B 25/08

(54) **EMERGENCY CALL THROUGH MOBILE COMMUNICATION NETWORK**

(71) Applicant: Rakuten Mobile, Inc., Tokyo 158-0094 (JP)
(72) Inventor: AOYAGI Kenichiro, Tokyo 158-0094 (JP); KITAGAWA Koichiro, Tokyo 158-0094 (JP); SHETE Pankaj, Tokyo 158-0094 (JP); MUHAMMAD Awn, Tokyo 158-0094 (JP)
(74) Representative: Betten & Resch
(86) International application number: PCT/JP2022/036264
(87) International publication number: WO 2024/069812

(57) **Abstract**

A communication control apparatus includes at least one processor that performs: by a measurement information collector, collecting measurement information of a sensor through a mobile communication network; by a measurement information analyzer, analyzing the measurement information at least during normal time when no emergency is occurring; by an emergency detector, detecting an emergency based on the measurement information; by an emergency reporter, making an emergency report through the mobile communication network in response to the emergency, before the measurement information analyzer completes the analysis of the measurement information; and by an emergency response criteria provider, causing the emergency response agency to provide emergency response criteria concerning an emergency whose report is acceptable, to the mobile communication network.

## Description

### BACKGROUND OF THE INVENTION

### 1. Field of the Invention

The present disclosure relates to emergency report through mobile communication network.

### 2. Description of the Related Art

The number, types, and applications of wireless communication devices (hereinafter also collectively referred to as communication devices), represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Patent Literature 1: JP-A-2010-278886

### SUMMARY OF THE INVENTION

In 5G, artificial intelligence (AI)/machine learning (ML) functions such as the NWDAF (Network Data Analytics Function) have been introduced to collect and analyze data on mobile communication networks. However, since it takes time to analyze data, it is likely that emergencies are not timely responded to.

The present disclosure was made in consideration of the situation, and its purpose is to provide a communication control apparatus and the like that can timely respond to emergencies.

In order to solve the above issue, a communication control apparatus in a certain aspect of the present disclosure includes at least one processor that performs: by a measurement information collector, collecting measurement information of a sensor through a mobile communication network; by a measurement information analyzer, analyzing the measurement information at least during normal time when no emergency is occurring; by an emergency detector, detecting an emergency based on the measurement information; and by an emergency reporter, making an emergency report through the mobile communication network in response to the emergency, before the measurement information analyzer completes the analysis of the measurement information.

According to the aspect, an emergency report in response to an emergency detected based on the measurement information is timely made through the mobile communication network, without waiting for the completion of the analysis of the measurement information of the sensor by the measurement information analyzer, which can be implemented by the NWDAF and the like.

Another aspect of the present disclosure is a communication control method. The method includes: collecting measurement information of a sensor through a mobile communication network; analyzing the measurement information at least during normal time when no emergency is occurring; detecting an emergency based on the measurement information; and making an emergency report through the mobile communication network in response to the emergency, before the analysis of the measurement information completes.

Further another aspect of the present disclosure is a computer-readable medium. The medium stores a communication control program causing a computer to perform: collecting measurement information of a sensor through a mobile communication network; analyzing the measurement information at least during normal time when no emergency is occurring; detecting an emergency based on the measurement information; and making an emergency report through the mobile communication network in response to the emergency, before the analysis of the measurement information completes.

In addition, any combination of the above components, and any conversion of the expression of the present disclosure among methods, devices, systems, recording media, computer programs and the like are also encompassed within the disclosure.

According to the present disclosure, emergencies can be timely responded to.

### BRIEF DESCRIPTION OF THE DRAWINGS

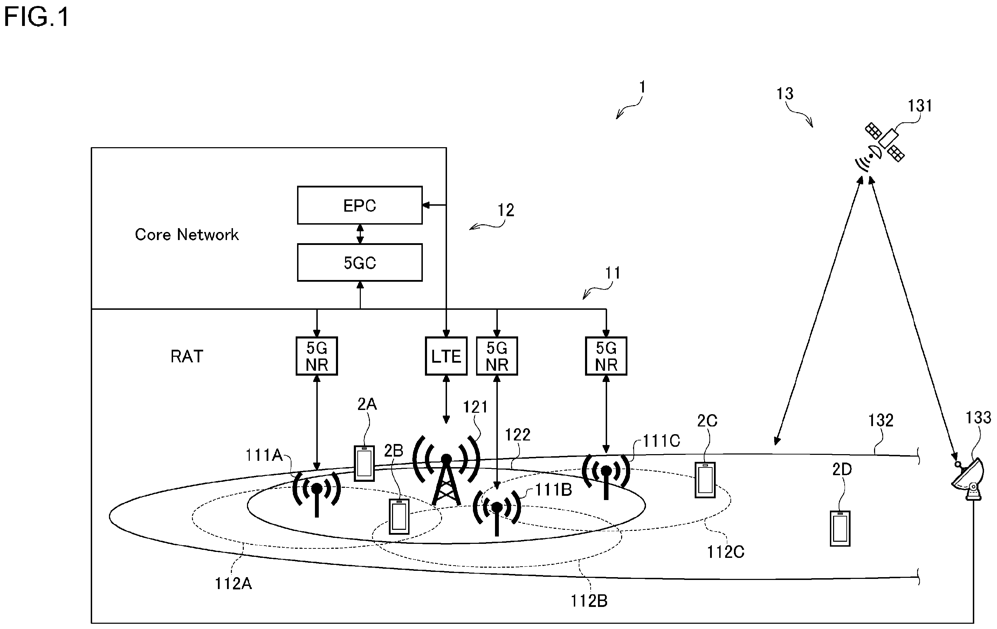

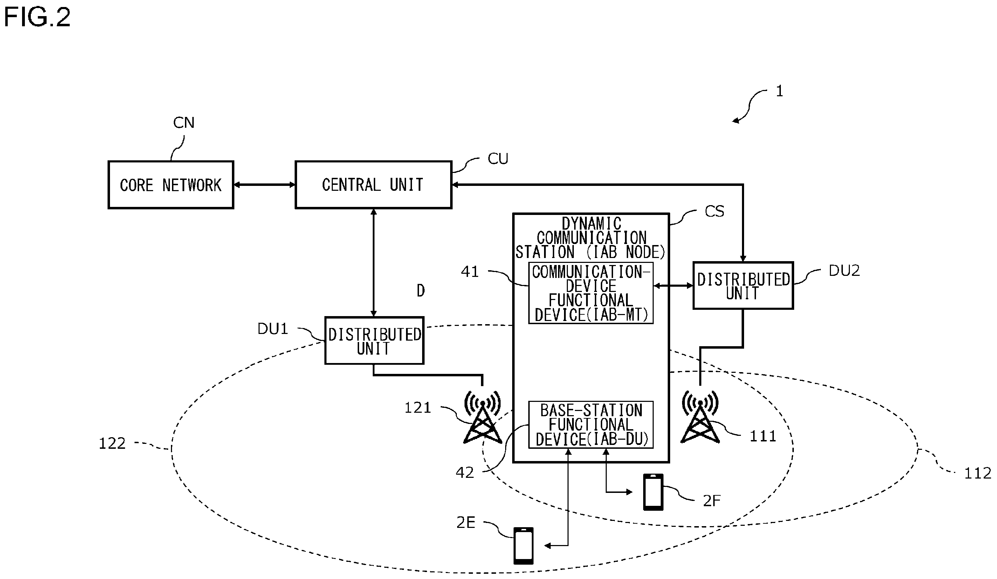

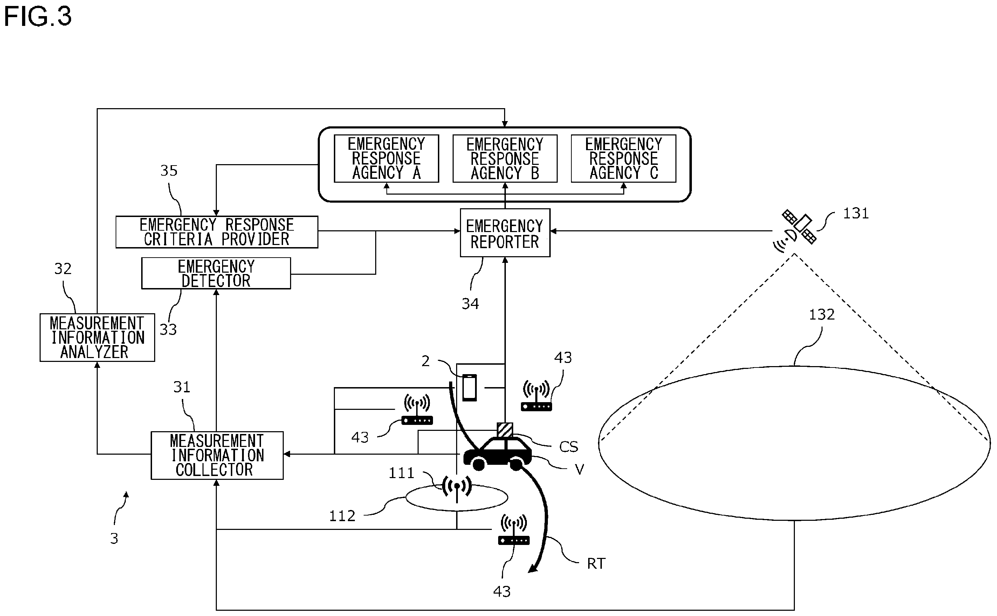

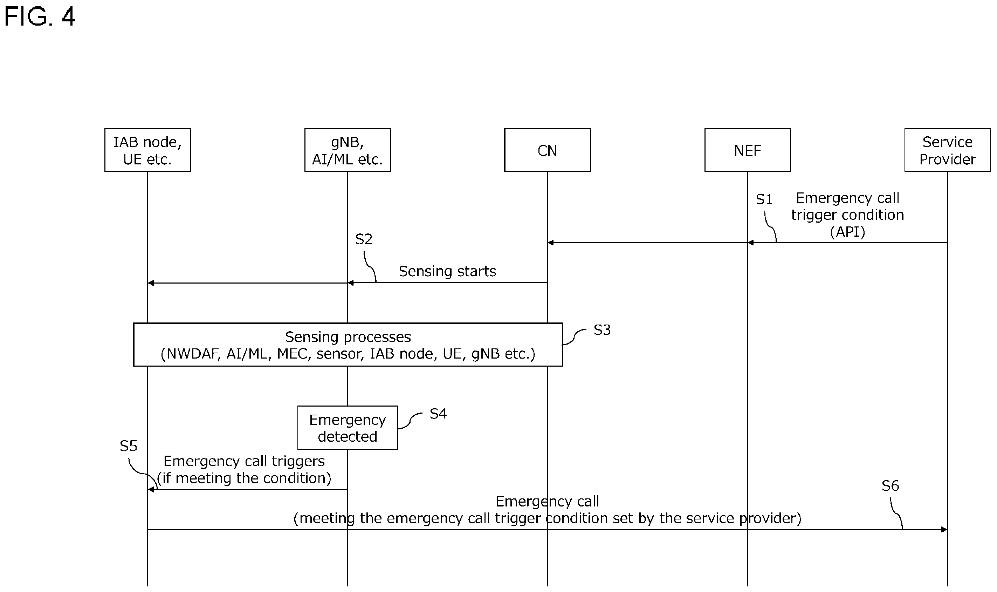

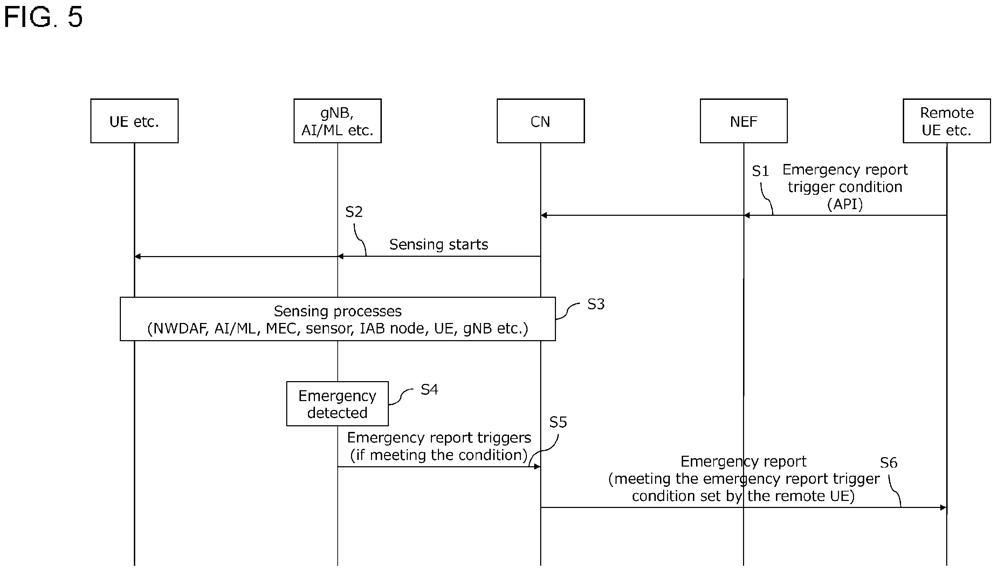

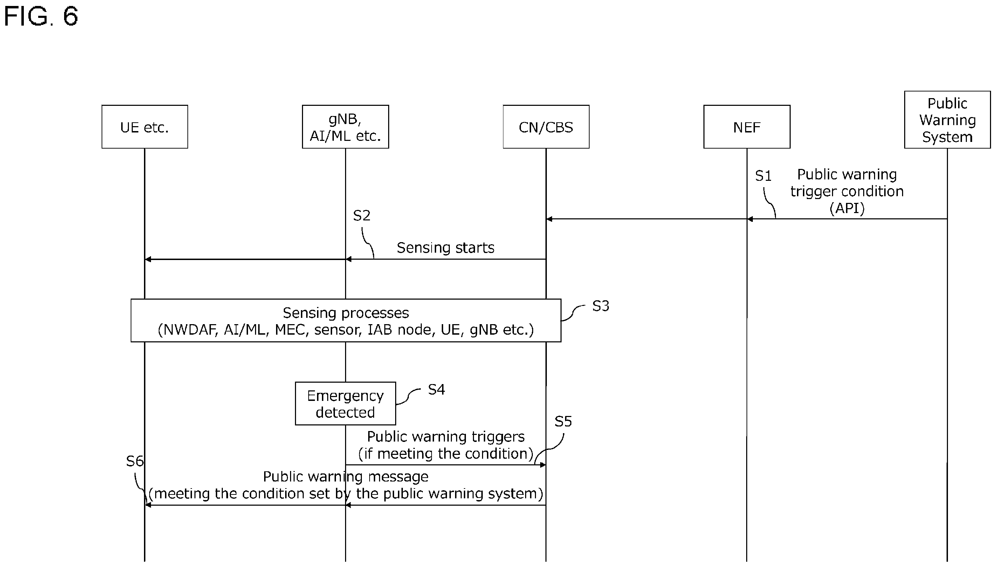

Figure 1 schematically shows the overview of a wireless communication system to which the communication control apparatus is applied. Figure 2 schematically shows the general configuration of the wireless communication system to which the communication control apparatus is applied. Figure 3 is a functional block diagram of the communication control apparatus. Figure 4 schematically shows the procedure for the communication control apparatus to make an emergency call to an emergency response agency. Figure 5 schematically shows the procedure for the communication control apparatus to make an emergency report to a remote user and the like. Figure 6 schematically shows the procedure for the communication control apparatus to make an emergency information distribution as an emergency report.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g., 6G), or any wireless communication networks that are not associated with generations, such as Wi-Fi (registered trademark).

The 5G wireless communication system 11 may include a plurality of 5G base stations 111A, 111B, and 111C (hereinafter also collectively referred to as 5G base station 111) installed on the ground capable of communicating by 5G NR with communication devices or communication devices 2A, 2B, 2C, and 2D (hereinafter also collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter also collectively referred to as 5G cell 112).

The size of the 5G cell 112 of each 5G base station 111 is freely selected, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For the reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In such a way, the gateway 133 connects the non-terrestrial network (NTN), which is including communication satellites 131 as a non-terrestrial base station or a satellite base station, and the terrestrial network TN, which includes terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In such a way, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft or a drone flying in stratosphere or other lower (e.g., about 20 km above the ground) atmosphere may be used as a non-terrestrial base station in addition to or instead of the communication satellite 131.

Figure 2 schematically shows the general configuration of the wireless communication system 1 to which the communication control apparatus according to an embodiment of the present disclosure is applied. As shown also in Figure 1, the wireless communication system 1 is usually constructed by the terrestrial communication cells 112 and 122 (hereinafter also referred to as fixed communication cells) provided by the terrestrial base stations 111 and 121 stationarily installed on the ground (hereinafter also referred to as fixed base stations). However, mobile communication cannot be performed outside fixed communication cells, and the quality of mobile communications might be low depending on time or place even within fixed communication cells. Although the wireless communication system 1 can also include the satellite communication system 13 that uses the communication satellite 131 as a non-terrestrial base station or moving base station, it is impractical to supplement the terrestrial network of terrestrial base stations 111 and 121 solely by the communication satellites 131.

To solve such an issue, it is preferable to introduce a dynamic communication station CS to supplement the fixed communication cell 112 or 122 provided by the fixed base station 111 or 121, as schematically shown in Figure 2. A dynamic communication station CS is, for example, a communication station capable of providing a dynamic communication cell that can vary in space or time. For example, a moving communication station is an example of a dynamic communication station CS that provides a spatially varying (i.e., moving) dynamic communication cell. Besides, a communication station that can switch between an active state that provides a dynamic communication cell and an inactive state that does not provide a dynamic communication cell is an example of a dynamic communication station CS that provides a dynamic communication cell that varies in time (i.e., is switched on and off).

It should be noted that a dynamic communication station CS may be, for example, a communication station whose operating time is limited to a specific time period, or it may be an on-demand communication station that can be adaptively switched between an inactive state and an active state in accordance with the communication demand of a communication device and the like. Besides, examples of a dynamic communication station CS include a moving base station such as the communication satellite 131 that itself functions as a base station (alternatively, it may be a fixed base station that can switch between an active state and an inactive state), and something like a repeater that communicates with an existing fixed base station 111 or 121 to expand an existing fixed communication cell 112 or 122 (hereinafter also referred to as a relay station). The dynamic communication station CS in the example in Figures 2 and 3 is an IAB (Integrated Access and Backhaul) node.

IAB is a technology specified in 5G to expand a communication cell of a parent node, utilizing wireless backhaul between a base station that serves as an IAB donor (parent node) and an IAB node (child node) or between parent and child IAB nodes (where an IAB node closer to the IAB donor is the parent node, and an IAB node far from the IAB donor is the child node). Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g., underground or to the upper or lower floors of a building.

In Figure 2, the dynamic communication station CS as the IAB node includes a communication-device functional device 41 that functions as a communication device for a parent node (a parent base station) including the fixed base station 111 or 121 and a base-station functional device 42 that functions as a child base station for a communication device UE and provides the dynamic communication cell. In 5G, the communication-device functional device 41 is specified as a MT (Mobile Termination) or IAB-MT, and the base-station functional device 42 is specified as a DU (Distributed Unit) or IAB-DU. It should be noted that, in other wireless communication systems including generations after 5G, functions similar to IAB, MT, DU, CU (Central Unit described below) may be provided under different names, but such similar functions may be utilized as IAB, MT, DU, CU in the present embodiment.

Two fixed base stations 111 and 121 are illustrated in Figure 2. The first fixed base station 121 as a 4G base station provides the first fixed communication cell 122 as a 4G cell, and the second fixed base station 111 as a 5G base station provides the second fixed communication cell 112 as a 5G cell. In the example in Figure 2, the baseband function of each fixed base station 111 and 121 is divided into a central unit (CU) on the core network CN side and a distributed unit (DU) on the communication device UE side. The first distributed unit DU1 of the first fixed base station 121 is provided near the radio equipment such as an antenna of the first fixed base station 121, typically in the same base station facility as the radio equipment. The second distributed unit DU2 of the second fixed base station 111 is provided near the radio equipment such as an antenna of the second fixed base station 111, typically in the same base station facility as the radio equipment. Although the central unit CU in the example shown in the figure is shared by the first fixed base station 121 (the first distributed unit DU1) and the second fixed base station 111 (the second distributed unit DU2), separate central units may be provided for each of the fixed base stations 111 and 121. The central unit CU is connected to the core network CN. The connection between the radio equipment such as an antenna in each of the fixed base stations 111 and 121 and each of the distributed units DU1, DU2, the connection between each of the distributed units DU1, DU2 and the central unit CU, and the connection between the central unit CU and the core network CN, are typically wired by conductors or optical fibers and the like, although some or all of those connections may be wireless.

The communication-device functional device 41 (IAB-MT) of the dynamic communication station CS, depending on the position of the dynamic communication station CS, can connect wirelessly with the distributed unit DU of either fixed base station 111 or 121. In the example in Figure 2, the communication-device functional device 41 is connected wirelessly to the second distributed unit DU2 of the second fixed base station 111. In such a case, the dynamic communication station CS functions as a child node for the second fixed base station 111 as a parent node (a parent base station) or an IAB donor, and expands the second fixed communication cell 112 by the second fixed base station 111 as a parent node. Then, the base-station functional device 42 (IAB-DU) of the dynamic communication station CS provides a dynamic communication cell (not shown) or a moving communication cell as expanded communication cell of the second fixed communication cell 112 to the communication device UE. In the example in Figure 2, two communication devices 2E and 2F connected to the base-station functional device 42 of the dynamic communication station CS are shown schematically. The first communication device 2E being inside the first fixed communication cell 122 and outside the second fixed communication cell 112, substantially communicates with the second fixed base station 111 via the dynamic communication station CS. The second communication device 2F being inside the overlapping area of the first fixed communication cell 122 and the second fixed communication cell 112, substantially communicates with the second fixed base station 111 via the dynamic communication station CS. It should be noted that the dynamic communication station CS as an IAB node may expand a moving communication cell such as the satellite communication cell 132, with a moving base station such as the communication satellite 131 as a parent base station.

The dynamic communication station CS when realized as a moving communication station (such as an IAB node) is attached to a movable object, except when it can move (or fly) autonomously like the communications satellite 131. A movable object is any movable thing or person and includes, for example, automobiles, trains, motorcycles, bicycles, airplanes, drones, ships, and any other vehicles. Besides, the moving dynamic communication station CS may be a communication device 2 used by a moving person, for example, a communication device 2 equipped with a tethering function or personal hotspot function. Since such a communication device 2 (dynamic communication station CS) usually functions as a wireless LAN access point, the RAT (e.g., 5G NR) used by the base station to be expanded (e.g., the second fixed base station 111) and the RAT used by the expanding dynamic communication station CS may be different.

Figure 3 is a functional block diagram of the communication control apparatus 3 according to the present embodiment. The communication control apparatus 3 includes a measurement information collector 31, a measurement information analyzer 32, an emergency detector 33, an emergency reporter 34, and an emergency response criteria provider 35. Some of these functional blocks can be omitted as long as the communication control apparatus 3 realizes at least some of the operations or effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in the present embodiment, some or all of functional blocks of the communication control apparatus 3 may be realized in a centralized or distributed manner by computer or processor provided in the communication device 2, the dynamic communication station CS (including the movable object V), the sensor unit 43, the base station (the distributed unit DU or the central unit CU), the gateway 133, and the core network CN.

In the example in Figure 3, the dynamic communication station CS as an IAB node is installed to a vehicle V as a movable object. The vehicle V to which the dynamic communication station CS is installed may move along predetermined or any movement routes. In the example in Figure 3, a vehicle V with a dynamic communication station CS attached moves on the ground along any movement route RT. On the ground around the movement route RT, there are the terrestrial communication cell 112 (e.g., 5G cell) provided by the terrestrial base stations 111 (e.g., 5G base station), and the non-terrestrial communication cell 132 (e.g., satellite communication cell) provided by the non-terrestrial base station 131 (e.g., communication satellite).

The dynamic communication station CS attached to the vehicle V may provide a dynamic communication cell (not shown) as an extended communication cell around the communication cell 112 or 132, with the illustrated terrestrial base station 111 or non-terrestrial base station 131 as the parent base station. The following describes an example in which the dynamic communication station CS attached to the vehicle V provides a dynamic communication cell (not shown) as an extended communication cell around the communication cell, with another base station (not shown) as the parent base station. In such a case, the existing communication cells 112 and 132, which are not parent communication cells, are neighboring communication cells to the dynamic communication cell (not shown) provided by the dynamic communication station CS moving or passing in their vicinity. It should be noted that, if the dynamic communication station CS attached to the vehicle V itself functions as a base station, it may provide a dynamic communication cell (not shown) around it without a parent base station.

Although the following illustrates the dynamic communication station CS that moves along the movement route RT with the vehicle V, the description applies similarly to a dynamic communication station CS that is fixedly installed on the ground and the like and can switch between an active state and an inactive state. In other words, a dynamic communication station CS approaching the neighboring communication cell 112 or 132 and a dynamic communication station CS that is fixedly installed in the vicinity of the neighboring communication cell 112 or 132 and can switch from an inactive state to an active state can be seen as equivalents. Besides, a dynamic communication station CS moving away from the neighboring communication cell 112 or 132 and a dynamic communication station CS that is fixedly installed in the vicinity of the neighboring communication cell 112 or 132 and can switch from an active state to an inactive state can be seen as equivalents.

The measurement information collector 31 collects measurement information of a sensor through a mobile communication network. The sensors are one or more sensors of any type located at any location. The measurement object of each sensor is also freely selected, but for the purpose of emergency detection by the emergency detector 33 described below, various types of sensors that can acquire measurement information directly or indirectly indicating the occurrence of an emergency are utilized.

For example, the sensor can be an image sensor such as a camera, and the emergency detector 33, which can utilize various image recognition technologies, can detect the occurrence of an emergency based on images captured by the image sensor. Similarly, the sensor can be a voice sensor such as a microphone, and the emergency detector 33, which can utilize various voice recognition technologies, can detect the occurrence of an emergency based on voices captured by the voice sensor.

Besides, the sensors may be temperature sensors, humidity sensors, electrical sensors, magnetic sensors, optical sensors, mechanical sensors, acoustic sensors, chemical sensors, biological sensors, or other sensors that measure physical, chemical, or biological parameters that directly or indirectly indicate various states of the measurement object. If the measurements of such various sensors are significantly out of the range taken under normal conditions, the emergency detector 33 may determine that an emergency is occurring.

Furthermore, the sensors may measure communication measurement information such as communication quality, traffic volume, and communication type in the mobile communication network. For example, if the traffic volume at a particular location increases more rapidly than at other locations, the emergency detector 33 may determine that this is the result of some emergencies occurring there. Besides, if emergency communications such as emergency calls are occurring intensively at a particular location, the emergency detector 33 may determine that some emergencies are occurring there.

The various sensors described above are distributed on the mobile communication network in various manners or forms.

At least some of the sensors may be provided in a communication device 2 that can communicate with the mobile communication network. In such a case, the various sensor functions provided in the general-purpose communication device 2 such as a smartphone, constitute each sensor or each sensor group. Specifically, recent smartphones, for example, are equipped with sensor functions for image sensors (cameras), voice sensors (microphones), temperature sensors, acceleration sensors (inertial sensors), position sensors (the GPS and the like), and biometric sensors (to measure heart rate or blood pressure). Besides, communication devices 2 such as smartphones are standardly equipped with various communication measurement (communication sensor) functions for mobile communication with mobile communication networks. Specifically, a communication device 2 functioning as a communication sensor measures the communication quality and the like at its own position and provides it to the base station in the form of channel state information (CSI) and the like.

At least some of the sensors may be provided in a communication station (a dynamic communication station CS is illustrated in Figure 3) that constitutes the mobile communication network and can communicate with a communication device 2. Here, the mobile communication network means the entire network including the radio access network (RAN) including various base stations 111, 121, and 131 as illustrated in Figure 1, and the core network CN. Besides, the communication station mainly constitutes the RAN, and specific examples include various base stations 111, 121, and 131, IAB nodes (Figure 2), and relay stations. Each communication station can be equipped with one or more sensors of any type. In particular, the communication-device functional device 41 (IAB-MT) in the IAB node as the dynamic communication station CS illustrated with respect to Figure 2, can be equipped with standard communication measurement (communication sensor) functions similar to general communication devices 2 such as smartphones.

At least some of the sensors may be provided as sensor units 43 that can communicate directly or indirectly with communication stations (base stations, IAB nodes, relay stations and the like) that constitute the mobile communication network, or directly or indirectly with the RAN. It should be noted that the sensor units 43 may be provided in a movable object such as a vehicle V or any other object equipped with communication functions. These sensor units 43 do not need to be equipped with advanced communication functions like a general-purpose communication device 2 such as a smartphone, but may be like an IoT device with minimal communication functions that can share measurement results to the RAN or the core network CN. Besides, the sensor unit 43 may utilize short-range wireless communication technologies such as Bluetooth (trademark) to provide measurement results to nearby communication devices 2, dynamic communication stations CS, vehicles V, neighboring base stations 111, other sensor units 43 and the like, and from there relaying or providing them to the RAN or the core network CN as necessary.

The wide variety of sensors described above constitute a sensor network by being interconnected or coupled via a mobile communication network (especially RAN). The function of the measurement information collector 31, which collects measurement information of various sensors from such a sensor network, may be realized by at least a portion of the AI/ML functions responsible for collecting data on a mobile communication network such as the NWDAF. Such AI/ML functions and other data processing functions are typically realized in the core network CN as described below, but may be realized at least in part by an edge server provided closer to a communication device 2 than the core network CN. The technology for distributing and expediting processes by utilizing such an edge server is also called the multi-access edge computing (MEC). Besides, the data processing functions available for the measurement information collector 31, the emergency detector 33 described below and the like may be realized at least in part in the user plane function (UPF) in the core network CN.

The measurement information analyzer 32 analyzes the measurement information collected by the measurement information collector 31, at least during normal time when no emergency is occurring. The data analysis function by the measurement information analyzer 32 may be realized, for example, by the NWDAF (Network Data Analytics Function) introduced in the 5GC as the core network CN of 5G, or other AI (Artificial Intelligence)/Machine Learning (ML) functions. The NWDAF is responsible for collecting and analyzing data on the network including 5G. Specifically, the NWDAF collects and accumulates activity history information or measurement information of a large number of communication devices 2, communication stations (base stations, IAB nodes, relay stations and the like), sensor units 43 and other objects (vehicles V and the like) connected to the mobile communication network, and utilizes the analysis results for traffic control on the mobile communication network, for example. It should be noted that, in other wireless communication systems, including those of later generations than 5G, functions similar to the NWDAF might be provided under different names. Such similar functions may be utilized in the present embodiment instead of or in addition to the NWDAF.

The emergency detector 33 detects an emergency based on the measurement information collected by the measurement information collector 31 (the measurement information that directly or indirectly indicates the occurrence of an emergency). Examples of emergency detection based on various sensors or various measurement information are described above in relation to the measurement information collector 31. The functions of the emergency detector 33 may be realized by at least a portion of an AI/ML function responsible for analyzing data on mobile communication network such as the NWDAF. However, since timeliness is required for emergency detection by the emergency detector 33 and emergency report by the subsequent emergency reporter 34, it is preferable to minimize the utilization of the AI/ML function or the data analysis function by the emergency detector 33 (in any case, less than the utilization of the AI/ML function or the data analysis function by the measurement information analyzer 32). Alternatively, the emergency detector 33 may detect an emergency based on simple criteria that are not based on the AI/ML function. For example, the emergency detector 33 may detect an emergency based on a comparison of at least some measurement information values (measurement values) collected by the measurement information collector 31 and predetermined decision thresholds.

The emergency detection process by the emergency detector 33, like the measurement information analysis process by the measurement information analyzer 32, is performed on the measurement information collected by the measurement information collector 31, but as mentioned above, it is simpler than the measurement information analysis process by the measurement information analyzer 32 and can be executed quickly. The emergency detection process by the emergency detector 33 may be further accelerated, by temporarily stopping or delaying the measurement information analysis process by the measurement information analyzer 32, while the emergency detection process by the emergency detector 33 is being performed. Alternatively, the emergency detection process by the emergency detector 33 and the measurement information analysis process by the measurement information analyzer 32 may be executed in parallel, but as mentioned above, the emergency detection process by the emergency detector 33 is completed faster than the measurement information analysis process by the measurement information analyzer 32.

The emergency reporter 34 makes an emergency report through the mobile communication network in response to the emergency detected by the emergency detector 33, before the measurement information analyzer 32 completes the analysis of the measurement information. In the example shown in the figure, the emergency reporter 34 makes emergency reports to emergency response agencies A, B, C that can respond to the emergencies detected by the emergency detector 33. Examples of the emergency response agencies A, B, C include public agencies such as police agencies, fire departments, and coast guard agencies. Examples of emergency reports to these public agencies include calls (emergency calls) to the emergency call numbers of the public agencies. In Japan, "110" is assigned as the emergency call number to police agencies, "119" is assigned as the emergency call number to fire departments, and "118" is assigned as the emergency call number to the Japan Coast Guard.

An emergency report by eCall, which is an emergency report system for car accidents in Europe, is also an example of emergency report of the present embodiment. In such a case, information concerning an emergency (a car accident), such as the occurrence of a car accident (e.g., a traffic accident involving the vehicle V in Figure 3) or the position of the car, which is collected by the measurement information collector 31, is urgently reported to the jurisdictional emergency response agencies A, B, C, from the emergency reporter 34 through the mobile communication network. Besides, a report by Emergency Services Fallback (ES-FB) or EPS Fallback (Evolved Packet System Fallback) specified in 5G is also an example of the emergency report.

When the emergency reporter 34 makes an emergency report such as an emergency call to the emergency response agency A, B, C, the originator of the emergency report is required in the mobile communication network. When a user makes an emergency report using a communication device 2 such as his/her own smartphone, the communication device 2 is the originator of the emergency report. However, when the emergency reporter 34 makes an emergency report based on the measurement information collected from the sensor network by the measurement information collector 31, as in the present embodiment, the originator is not necessarily clear. Even if the sensor installed in the communication device 2 generates the measurement information that indicates the occurrence of an emergency, it may be against the user's intention to have the communication device 2 as the originator to make an emergency report. Therefore, it is preferable to set a neutral or public originator that does not belong to a specific user in a situation where it may be against the user's intention to set the communication device 2 as the originator of the emergency report.

The IAB node (Figure 2) as a dynamic communication station CS is suitable as such a neutral originator of an emergency report. The IAB node can transmit an emergency report from a neutral position, since it does not belong to a specific user and is equipped with the MT (the communication-device functional device 41) functioning as a normal communication device 2 such as a smartphone. As such, when the emergency reporter 34 causes the MT and the like to make an emergency report without substantial human intervention, the key elements of the emergency detected by the emergency detector 33, and the key elements of the main measurement information collected by the measurement information collector 31, which was the basis of the emergency, may be played as an automated voice in the emergency call. Besides, instead of an emergency call, the emergency reporter 34 may send an emergency message with similar content, to the emergency response agency A, B, C through the mobile communication network. It should be noted that, examples of neutral originators of emergency reports other than IAB nodes include the sensor units 43 (but only those equipped with functions that can originate emergency reports), the base stations 111, 121, and 131, the core network CN, fixed-line telephones, and public telephones.

It should be noted that the emergency response agencies A, B, C are not limited to public agencies such as police agencies, fire departments, and coast guard agencies, but may also be non-public agencies. For example, the management organization or an interested organization of the location or the facility where the emergency detected by the emergency detector 33 has occurred, or an organization affected in some way by the emergency and the like, may serve as an emergency response agency A, B, C and accept the emergency reports from the emergency reporter 34. Besides, as described below, the emergency reporter 34 may make an emergency report to the communication device 2 used by a remote user who should be reported the emergency detected by the emergency detector 33.

Each emergency response agency A, B, C may individually provide the emergency response criteria concerning the emergency whose report from the emergency reporter 34 is acceptable, to the mobile communication network through the emergency response criteria provider 35. Examples of the emergency response criteria include the severity of the emergency detected by the emergency detector 33, the threshold value for the measurement information (measurement value) collected by the measurement information collector 31 that serves as the basis of the emergency and the like. If the emergency detected by the emergency detector 33 does not meet the emergency response criteria of each emergency response agency A, B, C set by the emergency response criteria provider 35, then each emergency response agency A, B, C will not accept the emergency report from the emergency reporter 34. In other words, the emergency reporter 34 only makes an emergency report to each emergency response agency A, B, C through the mobile communication network, in response to the emergency that meets the emergency response criteria of each emergency response agency A, B, C set by the emergency response criteria provider 35. Alternatively, the emergency detector 33 may detect only emergency that meets the emergency response criteria of each emergency response agency A, B, C set by the emergency response criteria provider 35.

The emergency response criteria provider 35 may cause the mobile communication network to accept an update of the emergency response criteria from each emergency response agency A, B, C. In response to this, the emergency reporter 34 only makes an emergency report through the mobile communication network to each emergency response agency A, B, C, in response to the emergency that meets the emergency response criteria of each emergency response agency A, B, C as updated by the emergency response criteria provider 35. In such a way, each emergency response agency A, B, C can flexibly change its emergency response criteria concerning an emergency whose report from the emergency reporter 34 is acceptable, depending on the situation. As a result, for example, emergency reports that each emergency response agency A, B, C does not have the capacity or intention to respond to, can be prevented from being unnecessarily sent to each emergency response agency A, B, C. Besides, each emergency report can be sent to the most appropriate emergency response agency A, B, C, since the emergencies that each emergency response agency A, B, C can respond to are visualized for the emergency reporter 34.

As described above, based on the measurement information collected by the measurement information collector 31, emergency reports in response to the emergencies detected by the emergency detector 33, are transmitted to each emergency response agency A, B, C by the emergency reporter 34. On the other hand, the details of the measurement information analyzed by the measurement information analyzer 32, which take a longer time than the emergency detector 33, do not contribute to the emergency reporting which requires timeliness. However, the results of the analysis by the measurement information analyzer 32 may include detailed analysis concerning the content or the cause of the emergency or statistical information concerning the emergency, and may be shared with each emergency response agency A, B, C after the emergency report by the emergency reporter 34.

Figure 4 schematically shows the procedure for the communication control apparatus 3 according to the present embodiment, to make an emergency call to an emergency response agency. "S" in this and similar figures means a step or a process.

In S1, the emergency response agency illustrated as a "Service Provider", through the emergency response criteria provider 35, provides the emergency response criteria (Emergency call trigger condition) concerning an emergency whose emergency call from the emergency reporter 34 (specifically, the originator of the emergency call such as an IAB node) is acceptable, to the mobile communication network. In the example shown in the figure, the Network Exposure Function (NEF), which provides an Application Programming Interface (API) to the various functions in the 5GC, accepts the emergency response criteria from the emergency response agency and records them in an appropriate location in the core network CN (5GC).

In S2, the core network CN starts collecting various measurement information by various sensors distributed on the mobile communication network, i.e., the sensor network, according to the emergency response criteria recorded in S1. The measurement process of S3 started in S2 involves the collection of various measurement information from the sensor network by the measurement information collector 31. As mentioned above, the sensors constituting the sensor network may be provided in the communication device 2 (UE), may be provided in the communication stations (base stations, IAB nodes, relay stations), or may be provided as the sensor units 43.

In S4, the emergency detector 33 detects an emergency based on the measurement information collected in S3. In the illustrated example, the emergency detector 33 detects only emergencies that meet the emergency response criteria of the emergency response agency set in S1. In S5, the emergency reporter 34 causes an appropriate originator such as an IAB node (the communication-device functional device 41) to make an emergency call in response to the emergency detected in S4. In S6, the emergency call originated by the originator such as an IAB node in S5, is connected to an emergency response agency that meets the emergency response criteria set in S1.

Figure 5 schematically shows the procedure for the communication control apparatus 3 according to the present embodiment, to make an emergency report to a remote user and the like. Steps or processes similar to those in Figure 4 are added with the same symbols, and redundant explanations will be omitted. The execution procedure shown in the figure can be utilized, for example, to monitor a remote parent. Specifically, when an emergency occurs, such as a remote parent falling over, an emergency report is made to the communication device 2 used by the user who should be reported the emergency (e.g., a child of the parent). In Figure 5, the communication device 2 used by the user who should be reported the emergency (e.g., a child of the parent) is shown on the right side as "Remote UE", and the communication device 2 used by the user whose emergency should be detected (e.g., the parent) is shown on the left side as "UE". For convenience, the former communication device 2 is referred to as "child UE" and the latter communication device 2 is referred to as "parent UE" in the following.

In S1, the child UE, through the emergency response criteria provider 35, provides the emergency response criteria (Emergency report trigger condition) concerning the emergency whose report from the emergency reporter 34 (specifically, the originator of the emergency report such as the core network CN) is acceptable, to the mobile communication network.

In S4, the emergency detector 33 detects an emergency (e.g., a parent falling over) based on the measurement information collected in S3. In the illustrated example, the emergency detector 33 detects only emergencies that meet the emergency response criteria of the child UE set in S1. In S5, the emergency reporter 34 causes an appropriate originator to make an emergency report in response to the emergency detected in S4. In the example shown in the figure, the core network CN is the originator of the emergency report. It should be noted that, in the example, since the emergency report is made under the established relationship of parent and child, the originator of the emergency report does not necessarily have to be neutral, and the parent UE may be the originator of the emergency report if available. In S6, the emergency report originated by the originator such as the core network CN or the parent UE in S5, is received by the child UE that meets the emergency response criteria set in S1.

Figure 6 schematically shows the procedure for the communication control apparatus 3 according to the present embodiment, to make an emergency information distribution as an emergency report. Steps or processes similar to those in Figure 4 or Figure 5 are added with the same symbols, and redundant explanations will be omitted. The emergency information distribution is the simultaneous distribution of emergency information concerning disasters such as earthquakes and tsunamis and other emergencies, to the communication devices 2 (UEs) in a given emergency information distribution area. A system that distributes emergency information is called a public warning system (PWS), and also an earthquake and tsunami warning system (ETWS) especially if it distributes warnings concerning disasters such as earthquakes and tsunamis.

In S1, the warning distribution system, illustrated as the "Public Warning System", provides, through the emergency response criteria provider 35, the emergency response criteria (Public warning trigger condition) concerning the emergency whose emergency information should be distributed by the emergency reporter 34 (specifically, the core network CN or the Cell Broadcast Service (CBS)), to the mobile communication network.

In S4, the emergency detector 33 detects an emergency (e.g., the occurrence of an earthquake, a tsunami, a fire, an explosion, a crime, a serious incident and the like) based on the measurement information collected in S3. In the illustrated example, the emergency detector 33 detects only emergencies that meet the emergency response criteria of the warning distribution system set in S1. In S5, the emergency reporter 34 causes an appropriate distributer such as the core network CN or the CBS to distribute the emergency information in response to the emergency detected in S4. In S6, the emergency information (warning) distributed by the distributor such as the core network CN or the CBS in S5, is received simultaneously by the communication devices 2 (UEs) in the given emergency information distribution area.

According to the present embodiment, an emergency report in response to an emergency detected by the emergency detector 33 based on the measurement information, is timely made through the mobile communication network by the emergency reporter 34, without waiting for the completion of the analysis of the measurement information of the sensor by the measurement information analyzer 32, which can be implemented by the NWDAF and the like.

The present disclosure has been described above based on embodiments. It is obvious to those skilled in the art that various variations are possible in the combination of each component or each process in the exemplary embodiments, and that such variations are also encompassed within the scope of the present disclosure.

It should be noted that the structures, the operations, and the functions of each apparatus or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs:
   by a measurement information collector, collecting measurement information of a sensor through a mobile communication network;
   by a measurement information analyzer, analyzing the measurement information at least during normal time when no emergency is occurring;
   by an emergency detector, detecting an emergency based on the measurement information; and
   by an emergency reporter, making an emergency report through the mobile communication network in response to the emergency,
   before the measurement information analyzer completes the analysis of the measurement information.
2. The communication control apparatus according to item 1, wherein the emergency reporter makes the emergency report to an emergency response agency capable of responding to the emergency.
3. The communication control apparatus according to item 2, wherein
   the at least one processor performs, by an emergency response criteria provider, causing the emergency response agency to provide emergency response criteria concerning an emergency whose report is acceptable, to the mobile communication network, and wherein
   the emergency reporter makes an emergency report through the mobile communication network in response to an emergency that meets the emergency response criteria.
4. The communication control apparatus according to item 3, wherein
   the emergency response criteria provider causes the mobile communication network to accept an update of the emergency response criteria from the emergency response agency, and the emergency reporter makes an emergency report through the mobile communication network in response to an emergency that meets the updated emergency response criteria.
5. The communication control apparatus according to any of items 1 to 4, wherein the emergency reporter makes the emergency report to a communication device used by a user who should be reported the emergency.
6. The communication control apparatus according to any of items 1 to 5, wherein
   the mobile communication network includes the IAB (Integrated Access and Backhaul) node comprising the MT (Mobile Termination) that functions as a communication device to a parent base station and the DU (Distributed Unit) that functions as a child base station to a communication device, and
   the emergency reporter causes the MT to make the emergency report.
7. The communication control apparatus according to any of items 1 to 6, wherein the sensor is provided in a communication device capable of communicating with the mobile communication network.
8. The communication control apparatus according to any of items 1 to 7, wherein the sensor is provided in a communication station that constitutes the mobile communication network and is capable of communicating with a communication device.
9. The communication control apparatus according to any of items 1 to 8, wherein the sensor capable of communicating with a communication station that constitutes the mobile communication network.
10. A communication control method comprising:
   collecting measurement information of a sensor through a mobile communication network;
   analyzing the measurement information at least during normal time when no emergency is occurring;
   detecting an emergency based on the measurement information;
      and
   making an emergency report through the mobile communication network in response to the emergency, before the analysis of the measurement information completes.
11. A computer-readable medium storing a communication control program causing a computer to perform:
   collecting measurement information of a sensor through a mobile communication network;
   analyzing the measurement information at least during normal time when no emergency is occurring;
   detecting an emergency based on the measurement information; and
   making an emergency report through the mobile communication network in response to the emergency, before the analysis of the measurement information completes.

The present disclosure relates to emergency report through mobile communication network.

1 wireless communication system, 2 communication device, 3 communication control apparatus, 11 5G wireless communication system, 12 4G wireless communication system, 13 satellite communication system, 31 measurement information collector, 32 measurement information analyzer, 33 emergency detector, 34 emergency reporter, 35 emergency response criteria provider, 41 communication-device functional device, 42 base-station functional device, 43 sensor unit, 111 5G base station, 112 5G cell, 121 4G base station, 122 4G cell, 131 communication satellite, 132 satellite communication cell, 133 gateway.

## Claims

1. A communication control apparatus comprising at least one processor that performs:
by a measurement information collector, collecting measurement information of a sensor through a mobile communication network;
by a measurement information analyzer, analyzing the measurement information at least during normal time when no emergency is occurring;
by an emergency detector, detecting an emergency based on the measurement information; and
by an emergency reporter, making an emergency report through the mobile communication network in response to the emergency, before the measurement information analyzer completes the analysis of the measurement information.

2. The communication control apparatus according to claim 1, wherein the emergency reporter makes the emergency report to an emergency response agency capable of responding to the emergency.

3. The communication control apparatus according to claim 2, wherein
the at least one processor performs, by an emergency response criteria provider, causing the emergency response agency to provide emergency response criteria concerning an emergency whose report is acceptable, to the mobile communication network, and wherein
the emergency reporter makes an emergency report through the mobile communication network in response to an emergency that meets the emergency response criteria.

4. The communication control apparatus according to claim 3, wherein
the emergency response criteria provider causes the mobile communication network to accept an update of the emergency response criteria from the emergency response agency, and
the emergency reporter makes an emergency report through the mobile communication network in response to an emergency that meets the updated emergency response criteria.

5. The communication control apparatus according to claim 1, wherein the emergency reporter makes the emergency report to a communication device used by a user who should be reported the emergency.

6. The communication control apparatus according to claim 1, wherein
the mobile communication network includes the IAB (Integrated Access and Backhaul) node comprising the MT (Mobile Termination) that functions as a communication device to a parent base station and the DU (Distributed Unit) that functions as a child base station to a communication device, and
the emergency reporter causes the MT to make the emergency report.

7. The communication control apparatus according to claim 1, wherein the sensor is provided in a communication device capable of communicating with the mobile communication network.

8. The communication control apparatus according to claim 1, wherein the sensor is provided in a communication station that constitutes the mobile communication network and is capable of communicating with a communication device.

9. The communication control apparatus according to claim 1, wherein the sensor capable of communicating with a communication station that constitutes the mobile communication network.

10. A communication control method comprising:
collecting measurement information of a sensor through a mobile communication network;
analyzing the measurement information at least during normal time when no emergency is occurring;
detecting an emergency based on the measurement information; and
making an emergency report through the mobile communication network in response to the emergency, before the analysis of the measurement information completes.

11. A computer-readable medium storing a communication control program causing a computer to perform:
collecting measurement information of a sensor through a mobile communication network;
analyzing the measurement information at least during normal time when no emergency is occurring;
detecting an emergency based on the measurement information; and
making an emergency report through the mobile communication network in response to the emergency, before the analysis of the measurement information completes.
